(19) Europäisches Patentamt
European Patent Office
Office européen des brevets

(11) **EP 3 227 651 B2**

(12) **NOUVEAU FASCICULE DE BREVET EUROPEEN**
Après la procédure d'opposition

(45) Date de publication et mention de la décision concernant l'opposition:
**11.01.2023 Bulletin 2023/02**

(45) Mention de la délivrance du brevet:
**22.08.2018 Bulletin 2018/34**

(21) Numéro de dépôt: **15791514.1**

(22) Date de dépôt: **15.10.2015**

(51) Classification Internationale des Brevets (IPC):
***G01K 7/16*** *(2006.01)*

(52) Classification Coopérative des Brevets (CPC):
**G01K 7/16**; G01K 2007/166

(86) Numéro de dépôt international:
**PCT/EP2015/073827**

(87) Numéro de publication internationale:
**WO 2016/087105 (09.06.2016 Gazette 2016/23)**

(54) **PROCEDE ET DISPOSITIF DE DETECTION DE POINTS CHAUDS DANS UNE INSTALLATION, NOTAMMENT POUR LA DETECTION DE FUITES DANS DES CONDUITS D'AIR**

VERFAHREN UND VORRICHTUNG ZUR FESTSTELLUNG VON KRITISCHEN PUNKTEN IN EINER ANLAGE, INSBESONDERE ZUM ERKENNEN VON LECKS IN LUFTKANÄLEN

METHOD AND DEVICE FOR DETECTING HOT POINTS IN A FACILITY, ESPECIALLY FOR DETECTING LEAKS IN AIR DUCTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2014 FR 1461710**

(43) Date de publication de la demande:
**11.10.2017 Bulletin 2017/41**

(73) Titulaire: **WIN MS 91400 Orsay (FR)**

(72) Inventeurs:
• **SOMMERVOGEL, Laurent**
  **F-78350 Jouy en Josas (FR)**
• **OLIVAS, Marc**
  **F-93170 Bagnolet (FR)**
• **PELTIER, Arnaud**
  **F-91190 Gif sur Yvette (FR)**

(74) Mandataire: **IP Trust**
**2, rue de Clichy**
**75009 Paris (FR)**

(56) Documents cités:
WO-A1-2014/198526    FR-A1- 2 292 962
US-A- 3 981 181       US-A- 5 185 594
US-A- 5 793 293       US-A1- 2011 102 183

• Yoshimichi Ohki et al: "Highly Sensitive Location Method of an Abnormal Temperature Point in a Cable by Frequency Domain Reflectometry", 2013 IEEE International conference on Solid Dielectrics, 30 June 2013 (2013-06-30), - 4 July 2013 (2013-07-04), pages 117-120,
• LAYANE ABBOUD: "Time Reversal techniques applied to wire fault detection and location in wire networks", Theses, 19 March 2012 (2012-03-19), pages 1-216,

**Description**

La présente invention concerne un procédé et un dispositif de détection de points chauds dans une installation. Elle s'applique notamment pour la détection de fuites dans des conduits d'air, en particulier dans des avions.

Par la suite, on pourra appeler « bleed » l'air prélevé à l'étage de compression d'un moteur à turbine. Dans les avions modernes, cet air chaud peut être utilisé pour activer des cellules de dégivrage, pressuriser et chauffer la cabine, pressuriser les réservoirs hydrauliques ou des actionneurs pneumatiques ou encore préchauffer les freins.

Dans les avions, le « bleed » peut atteindre des températures très élevées. Un problème à résoudre est de détecter les fuites d'air chaud le long des conduits dans lesquels circule cet air.

Dans une solution connue on installe des boucles de détection constituées de câbles thermosensibles présentant des caractéristiques dépendantes de la température. Ces câbles thermosensibles sont installés le long de conduits afin d'être aptes à réagir aux changements de température induits par des fuites. Ainsi, lorsqu'il se produit une fuite dans un conduit, le flux d'air chaud incident sur le câble thermosensible le fait réagir. US5793293A, US5185594A, US2011102183A1 et FR2292962A1 décrivent des exemples. La boucle de détection est composée de câbles coaxiaux dont les deux conducteurs sont isolés par un sel eutectique hautement isolant à l'état nominal mais calibré pour fondre à une température spécifique. Cette propriété chimique est réversible. En cas de fuite, le câble thermosensible se comporte donc localement comme un quasi court-circuit 2. La boucle fermée provoque une alerte qui est envoyée vers le cockpit.

L'information « fuite » est transmise aux équipes de maintenance. Cependant, cette information n'indique pas précisément la localisation de fuite.

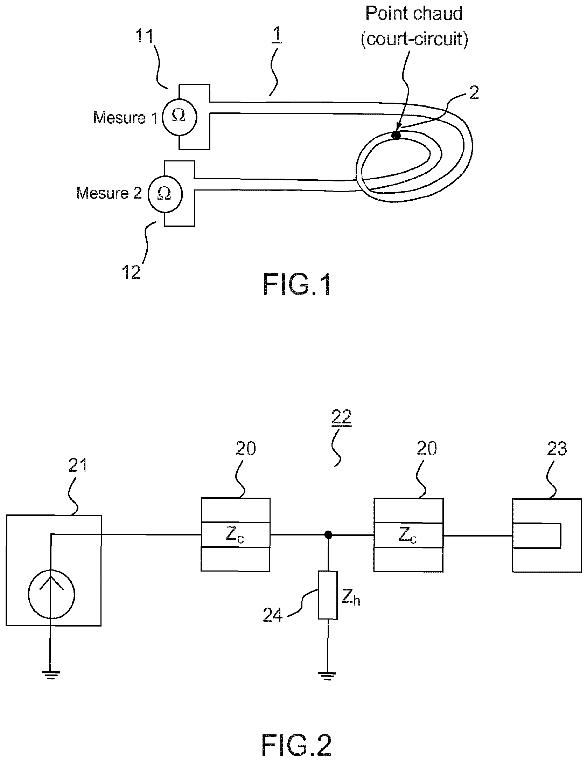

La plupart du temps, on effectue une mesure de résistance ou une mesure de capacité de chaque côté de la boucle comme l'illustre la figure 1. En connaissant la résistance linéique du câble 1, on en déduit l'endroit du câble où s'est produit la fuite à partir des mesures 11 et 12 de résistances R1, R2 effectuées de chaque côté de la boucle. Les mesures donnent :

- R1 = $2\rho L_{chaud}$
- R2 = $2\rho (L - L_{chaud})$

L étant la longueur totale du câble coaxial, et $L_{chaud}$ étant la longueur de la première extrémité à la fuite d'air chaud. Le facteur 2 prend en compte que les longueurs $L_{chaud}$ ou $(L - L_{chaud})$ sont parcourues à l'aller et au retour par le courant de mesure jusqu'au court circuit.
On en déduit naturellement la longueur $L_{chaud} = L / (1 + R1/R2)$.

En pratique, le vieillissement du câble produit des incertitudes de mesures. En particulier, le câble ne vieillit ou ne se dégrade pas de façon homogène. En effet des augmentations ponctuelles de résistance linéiques peuvent se produire en certains endroits du câble. Il apparaît par ailleurs de fausses alarmes dont l'origine n'est pas clairement identifiée.

Ainsi, les solutions de l'art antérieur présentent donc plusieurs inconvénients, en particulier :

- La précision de localisation est mauvaise ;
- La résistance nominale peut être sujette à variation en fonction de l'âge et de la vétusté de la boucle ;
- Une mesure de continuité nécessitant un accès aux deux extrémités est requise pour contrôler en permanence que la boucle n'est pas coupée ;
- Une dégradation peut avoir lieu localement au niveau des jonctions des câbles thermosensibles, augmentant la résistance de contact et biaisant la mesure de localisation d'une fuite.

Un but de l'invention est notamment de pallier les inconvénients précités. A cet effet, l'invention a pour objet un procédé de détection d'un point chaud dans une installation, ledit procédé utilisant au moins :

- une ligne composée d'au moins deux conducteurs isolés par un matériau dont l'impédance d'isolement dépend localement de la température, ladite ligne parcourant ladite installation ;
- un réflectomètre transmettant périodiquement un signal de réflectométrie à une extrémité de ladite ligne, ledit signal se propageant le long de ladite ligne, ledit réflectomètre mesurant les échos reçus et comparant les amplitudes desdits échos avec une référence donnée ;

un point chaud étant détecté lorsque les amplitudes d'un nombre donné d'échos successifs sont supérieures de façon croissante à ladite référence donnée, lesdits échos étant provoqués par une diminution de la valeur locale de ladite impédance d'isolement.

Les calculs de localisation de la diminution locale d'impédance sont par exemple effectués lorsque ledit point chaud est détecté.

Dans un mode de mise en oeuvre particulier, les mesures effectuées par ledit réflectomètre sont des mesures de réflectométrie de type multi-porteuse dite MCTDR.

Ledit réflectomètre effectue par exemple une comparaison desdites amplitudes avec une seconde référence dite référence initiale, ladite seconde référence étant inférieure à ladite référence donnée, une information étant générée lorsqu'au moins une desdites amplitudes dépasse ladite référence initiale. Ladite référence initiale est par exemple supérieure ou égale aux amplitudes des échos reçus lorsque ladite ligne est dans des conditions de fonctionnement données dite initiales. Ladite référence donnée est par exemple modifiée lorsqu'au moins une amplitude mesurée dépasse ladite référence initiale. La nouvelle valeur de ladite référence donnée est par exemple supérieure à ladite amplitude mesurée.

Dans un autre mode de mise en oeuvre possible, un signal de réflectométrie étant injecté sur la deuxième extrémité de ladite ligne, les échos reçus à cette extrémité sont mesurés et comparés à au moins ladite référence donnée.

Ladite installation étant par exemple un conduit d'air, ladite ligne étant placée à proximité le long dudit conduit, ledit procédé peut être appliqué à la détection de fuites dans ledit conduit, une fuite provoquant une augmentation locale de température formant un point chaud, ledit conduit d'air étant par exemple situé dans un aéronef.

L'invention a également pour objet un dispositif de détection d'un point chaud dans une installation, ledit dispositif comportant au moins :

- une ligne composée d'au moins deux conducteurs isolés par un matériau dont l'impédance d'isolement dépend localement de la température, ladite ligne étant apte à parcourir ladite installation ;
- un réflectomètre apte à transmettre périodiquement un signal de réflectométrie à une extrémité de ladite ligne et à mesurer les échos reçus ;

ledit dispositif mettant en oeuvre le procédé tel que décrit précédemment.

D'autres caractéristiques et avantages de l'invention apparaîtront à l'aide de la description qui suit, faite en regard de dessins annexés qui représentent :

- La figure 1 déjà décrite, une boucle de détection installée le long d'un conduit véhiculant de l'air chaud ;
- La figure 2, un schéma de principe d'un dispositif selon l'invention ;
- La figure 3, une illustration de l'évolution des échos de réflectométrie à la suite de l'apparition d'un point chaud ;
- La figure 4, un exemple de traitement mis en oeuvre par un dispositif selon l'invention.

La figure 2 présente un exemple de dispositif de détection mettant en oeuvre l'invention. Ce dispositif comporte au moins un système de réflectométrie 21, ou réflectomètre, et un câble coaxial thermosensible 22 apte à être installé le long d'un conduit véhiculant de l'air chaud, le câble est représenté sur la figure par son impédance caractéristique 20. Le câble coaxial thermosensible est par exemple du type de celui décrit précédemment. Dans tous les cas, il est caractérisé par une modification des propriétés diélectriques ou d'isolation du matériau isolant le conducteur central, ou âme centrale, et le conducteur périphérique, ou blindage. Ce câble coaxial pourrait être remplacé par toutes lignes bifilaires dont les deux conducteurs sont séparés par un matériau isolant dont les caractéristiques d'isolation varient avec la température. L'isolation est caractérisée par une résistance dont la valeur tend vers l'infini à une température correspondant à des conditions normales, cette valeur diminuant à partir d'une température donnée jusqu'à atteindre une très faible valeur de résistance, quasi nulle, par la montée de la température.

L'invention sera néanmoins décrite dans un cas d'utilisation d'un câble coaxial. Le câble coaxial n'est pas connecté en boucle. En particulier, une de ses extrémités est reliée au système de réflectométrie 21 et l'autre extrémité est par exemple en circuit ouvert 23, permettant de réduire la longueur de câble, ce qui est un avantage substantiel, notamment pour une application avionique. Avec un dispositif selon l'invention il n'est en effet plus nécessaire d'utiliser un câble 22, ou une ligne, connecté en boucle. Une configuration en boucle peut néanmoins être utilisée, notamment pour accroître la précision de localisation ou pour assurer une redondance d'information.

Ce câble 22 est installé le long du conduit de façon à réagir à une élévation produite par une fuite d'air chaud. Il peut être fixé sur le conduit ou fixé sur un support à proximité du conduit.

Le procédé selon l'invention se base donc sur les techniques de réflectométrie pour localiser les points chauds dus à une fuite de « bleed ». Le système de réflectométrie 21 utilisé effectue par exemple des mesures de réflectométrie multi porteuse, dite MCTDR, mais n'importe quel autre type de signal sonde de réflectométrie peut convenir, à condition que la largeur de bande soit adaptée à la longueur du câble 22. Le signal d'injection respecte par exemple au moins les trois conditions suivantes :

- La bande de fréquence et l'échantillonnage du signal sont adaptés à la longueur du câble pour s'assurer que le signal ne soit pas complètement atténué, en conservant une précision de localisation convenable ;

- Le signal respecte une parfaite innocuité pour le câble thermosensible ;
- Le signal respecte les normes applicables à l'environnement d'un dispositif mettant en oeuvre l'invention, par exemple CEM.

Avantageusement, les mesures MCTDR permettent qu'un dispositif selon l'invention se superpose à des systèmes de détection actuels, déjà installés par exemple.

Des mesures de réflectométrie multi porteuse sont notamment décrites dans le document WO2009/138391.

Les matériaux utilisés dans le câble thermosensible ne sont pas d'aussi bons conducteurs que le cuivre. Le signal de réflectométrie va donc subir une atténuation relativement importante, ce qui limite la portée si l'on veut conserver une bonne précision de localisation. Ce point n'est cependant pas très critique dans la mesure où la somme des longueurs des éléments thermosensibles des boucles de détection dans les avions dépasse rarement 20 mètres.

Pour détecter une fuite, le dispositif selon l'invention utilise la variation locale de l'impédance d'isolement du câble 22 en regard de la fuite, en particulier une diminution de la valeur locale de l'impédance d'isolement dans le domaine temporel. En d'autres termes, au fur et à mesure que le flux d'air va faire monter en température le point chaud situé au niveau de la fuite, une impédance parallèle 24 ponctuelle de valeur non nulle apparaît entre l'âme centrale et le blindage du câble thermosensible. La valeur Zh de cette impédance locale 24 devient de plus en plus faible, jusqu'au court-circuit quasi franc.

Le système de réflectométrie 21 génère un signal source qui se propage dans le câble thermosensible 22. Lorsqu'il est arrivé au point chaud, une partie de l'énergie est réfléchie vers la source, au niveau du système de réflectométrie, tandis que le reste du signal est transmis jusqu'au bout du câble, au niveau du circuit ouvert 23. On note $\Gamma$ l'écho obtenu en l'absence de point chaud, cet écho $\Gamma$ étant produit par la réflexion du signal de réflectométrie sur le circuit ouvert 23.

En notant $Z_c$ la valeur de l'impédance caractéristique 20 du câble et $Z_h$ la valeur de l'impédance d'isolement 24 apparaissant au point chaud, le point chaud va modifier l'écho $\Gamma$ en un écho $\Gamma'$ selon la relation (1) suivante :

$$\Gamma' = \frac{2Z_c Z_h \Gamma - Z_c^2 \left(1+\Gamma\right)}{2Z_c Z_h + Z_c^2 \left(1+\Gamma\right)}$$

En l'absence de point chaud, $Z_h$ est infini, on retrouve donc $\Gamma = \Gamma'$, en effet :

$$Z_h \rightarrow \infty \Rightarrow \Gamma' \rightarrow \frac{2Z_c Z_h \Gamma}{2Z_c Z_h} = \Gamma$$

En cas de court-circuit franc, total, $Z_h$ est égale à 0, $\Gamma' = -1$, en effet :

$$Z_h \rightarrow 0 \Rightarrow \Gamma' \rightarrow -1$$

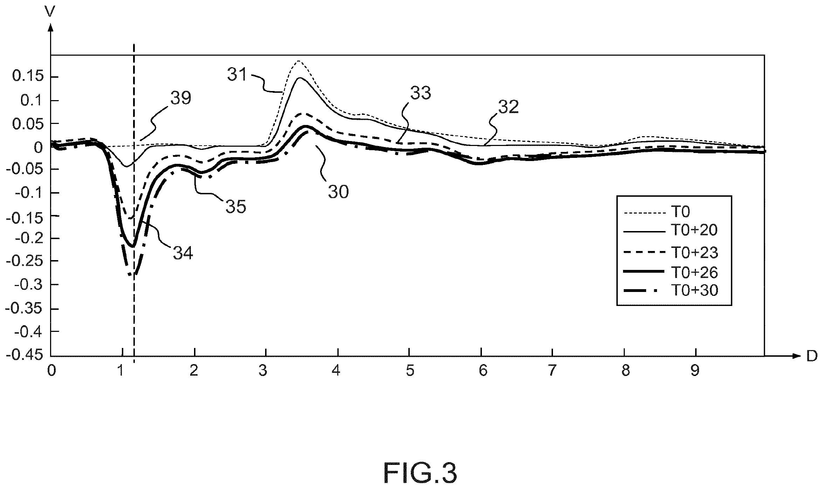

La figure 3 illustre la valeur des échos entre ces deux valeurs extrêmes, et plus particulièrement l'évolution des échos à partir de l'apparition d'un point chaud, en pratique à partir de l'apparition d'une fuite dans un conduit provoquant un échauffement. La figure 3 illustre l'évolution des échos par une représentation de l'évolution du réflectogramme de l'onde porteuse, le réflectogramme étant le signal résultant de la mesure de réflectométrie.

Une première courbe 31 représente l'écho reçu par le réflectomètre 21 dans le cas où il n'y a pas de point chaud, $Z_h$ étant infinie. Un pic positif 30 correspond à la réflexion sur le circuit ouvert 23. Une deuxième courbe 32 représente l'écho dans le cas d'apparition d'un point chaud. Un pic négatif 39 apparaît tandis que le pic positif 30 est diminué, correspondant à la perte d'énergie réfléchie au niveau du point chaud. La distance au point chaud est classiquement obtenue à partir de la vitesse de propagation du signal de réflectométrie et de son écho le long de la ligne 22. Les courbes de la figure 3 représentent donc l'amplitude de l'écho reçu en fonction de la distance.

Les autres courbes 33, 34, 35 représentent l'évolution de l'écho reçu au cours du temps, le pic négatif 39 augmentant négativement en fonction de l'augmentation de chaleur, le pic positif diminuant en conséquence.

La distance révélée par le pic négatif 39 permet d'obtenir la localisation du point chaud. Avantageusement, la précision de localisation peut être inférieure à 1% de la longueur totale du câble 22.

L'invention permet également et avantageusement de s'affranchir d'évolutions locales de résistances indépendantes de la température, telles que par exemple des augmentations de résistances de contact au niveau de certaines jonctions. En effet, ces problèmes locaux produisent des échos qui ne suivent pas l'évolution des échos illustrés par la figure 3, échos caractéristiques de l'apparition d'un point chaud.

Le câble peut être disposé en circuit ouvert comme illustré par la figure 2 ou faire une boucle. Dans ce dernier cas, il est relié par ses deux extrémités au réflectomètre 21. Dans une configuration en boucle, une mesure complémentaire peut être réalisée à l'autre extrémité. Un deuxième signal de réflectométrie est ainsi envoyé depuis cette autre extrémité pour confirmer la localisation du point chaud détecté par le signal envoyé depuis la première extrémité. On augmente ainsi avantageusement la fiabilité de l'information et sa précision. On peut utiliser avantageusement dans ce cas des techniques du type D-MCTDR qui permettent d'injecter le signal par les deux extrémités en même temps sans système de synchronisation.

L'invention a également comme avantage qu'elle peut s'adapter à des boucles existantes, sans modification de leur câblage. Il suffit de prévoir une connectique adaptée pour relier notamment le réflectomètre à la boucle et pour se superposer au système de détection déjà présent.

Il est possible de calculer la valeur $Z_h$ de la résistance d'isolement à partir des échos reçus et d'en déduire la température du point chaud. A cet effet, pour simplifier les calculs on peut prendre comme hypothèse qu'il n'y a pas de pertes dans le câble 22, la boucle étant en circuit ouvert 23. Dans ce cas, la relation (1) se simplifie et l'on obtient une valeur de l'écho $\Gamma$' provoqué par le point chaud fonction uniquement de $Z_h$ et de l'impédance caractéristiques $Z_c$ :

$$\Gamma' = \frac{-Z_c}{2Z_h + Z_c}$$

$Z_h$ est déduit de cette relation, soit :

$$Z_h = -Z_c\,(1 + \Gamma')/2\Gamma' \qquad\qquad (2)$$

Connaissant la loi d'évolution de l'impédance d'isolement $Z_h$ en fonction de la température, on en déduit la valeur $T_h$ de la température au point chaud.

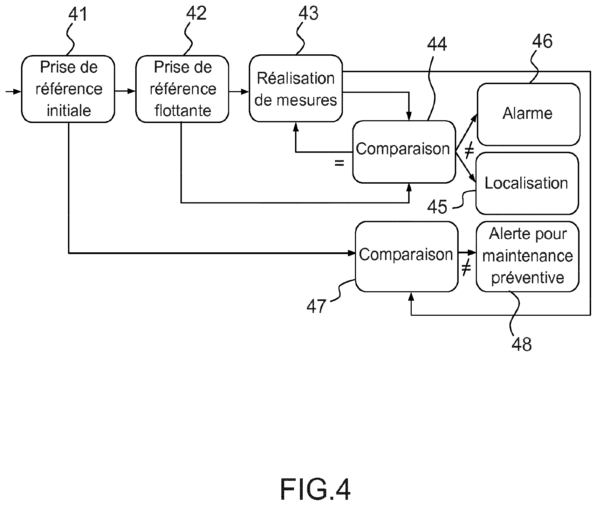

La figure 4 présente un exemple de traitement mis en oeuvre par un dispositif selon l'invention permettant avantageusement de compenser les dérives lentes des performances thermosensibles du câble 22, et aussi de mesurer ces dérives, ces mesures pouvant être utilisées pour les opérations de maintenance.

Dans une étape préliminaire, le réflectogramme de la ligne, en boucle ou en circuit ouvert est enregistré. Ce réflectogramme est obtenu à partir de mesures in situ, c'est-à-dire pour la ligne disposée le long du conduit à surveiller, installé de façon opérationnelle. Le réflectogramme enregistré a un profil du type de la courbe 31 de la figure 3 correspondant à l'absence de point chaud et constitue le profil d'origine ou profil de référence. Ce profil peut être régulièrement mesuré et comparé au profil de référence pour mesurer les dérives lentes de la ligne. Ces mesures peuvent être utilisées ultérieurement en maintenance pour identifier les dérives et anticiper des pannes. Les dérives lentes peuvent être notamment dues au vieillissement du câble ou encore aux changements de saisons. En pratique, un écho particulier correspond au profil de référence, les mesures de la dérive se font donc par rapport à cet écho constituant la référence initiale.

La référence initiale 41 est également utilisée en phase opérationnelle comme dans l'exemple illustré par la figure 4, pour une application embarquée. Dans cette phase opérationnelle, l'invention permet de discriminer les dérives rapides, dues à une augmentation de température, des dérives lentes, tout en mesurant ces dernières. Le dispositif conserve donc l'écho de référence intial 41 pour identifier les dérives lentes de la ligne et proposer par exemple une maintenance préventive.

Pour identifier les dérives rapides, provoquées par des apparitions de points chauds, le dispositif selon l'invention utilise une référence flottante 42, cette référence étant modifiée dans le temps. Cette référence flottante permet notamment de ne pas prendre en compte les dérives lentes et élimine ainsi de nombreuses sources de fausses alarmes. Le dispositif émet régulièrement des signaux pour effectuer les mesures de réflectométrie 43. Après chaque signal émis, les échos reçus sont mesurés puis comparés 44 à la référence flottante 42. Si l'amplitude de l'écho courant mesuré est inférieure à la référence flottante, un autre signal est émis puis une autre mesure réalisée et comparée. Lorsque les amplitudes d'un nombre donné d'échos successifs sont supérieures à la référence flottante de façon croissante, conformément aux profils de la figure 3, c'est-à-dire que la différence par rapport à la référence croît au cours du temps, c'est une information indiquant la présence d'un point chaud. La prise en compte de plusieurs mesures successives permet de s'affranchir de défauts qui ne seraient pas dus à l'apparition de points chauds. Dans un cas extrême, on peut cependant prendre ce nombre donné égal à 1.

Un calcul de localisation 45 du changement d'impédance d'isolement $Z_h$ est alors effectué selon les règles connues de la réflectométrie, cette localisation indiquant l'endroit d'apparition du point chaud. En parallèle, un signal d'alarme 46 est généré. Pour confirmer l'apparition du point chaud, plusieurs mesures successives sont par exemple faites pour vérifier si on obtient des profils du type de ceux de la figure 3. En effet, l'évolution des mesures doit correspondre à l'apparition d'un point chaud. Comme indiqué précédemment, en cas de connexion en boucle de la ligne 22, une mesure complémentaire de réflectométrie peut être faite à une deuxième extrémité. Etant données les constantes de temps en jeu, toutes ces mesures complémentaires peuvent être effectuées sans problème.

Parallèlement aux comparaisons 44 des échos courants avec la référence flottante, des mesures 47 de ces échos sont effectuées avec la référence initiale. Ces comparaisons 47 peuvent être effectuées à une cadence inférieure aux précédentes 44. En effet, étant donné qu'il s'agit de mesure des dérives lentes, il n'est pas nécessaire d'effectuer des comparaisons selon des périodes courtes. Si le résultat de la comparaison 47 entre l'amplitude de l'écho courant et la référence initiale est supérieur à un seuil donné, une alerte 48 est générée notamment pour une maintenance préventive. Cette alerte peut être mémorisée ou envoyée à un centre de maintenance. La valeur de la référence flottante peut être modifiée à la suite du résultat de cette comparaison. En particulier, la nouvelle valeur de la référence flottante peut être choisie pour être supérieure à l'amplitude de l'écho ainsi détecté.

L'invention a été décrite pour la détection de fuites dans des conduits d'air, notamment à l'intérieur d'aéronefs. Cependant, l'invention peut avantageusement s'appliquer pour la détection de points chauds dans des installations autres que des conduits d'air, permettant de détecter d'autres causes de points chauds, par exemple des départs d'incendie. Dans ce cas, la ligne 22 parcourt l'installation à surveiller, le parcourt étant choisi de façon appropriée au type de surveillance ou de protection que l'on souhaite apporter.

Pour des applications avioniques, un dispositif selon l'invention n'est pas nécessairement embarqué. Il est en effet possible de l'utiliser en mode maintenance.

## Revendications

1. Procédé de détection d'un point chaud dans une installation, ledit procédé utilise au moins :

   - une ligne (22) composée d'au moins deux conducteurs isolés par un matériau dont l'impédance d'isolement (24) dépend localement de la température, ladite ligne parcourant ladite installation ;
   - un réflectomètre (21) transmettant périodiquement un signal de réflectométrie à une extrémité de ladite ligne, ledit signal se propageant le long de ladite ligne, ledit réflectomètre mesurant les échos reçus et comparant (44) les amplitudes desdits échos avec une référence donnée (42) ;

   **caractérisé en ce qu'**un point chaud étant détecté lorsque les amplitudes d'un nombre donné d'échos successifs sont supérieures de façon croissante à ladite référence donnée, lesdits échos étant provoqués par une diminution de la valeur locale de ladite impédance d'isolement (24).

2. Procédé selon la revendication 1, **caractérisé en ce que** les calculs de localisation (45) de la diminution locale d'impédance sont effectués lorsque ledit point chaud est détecté.

3. Procédé selon l'une quelconque des revendications précédentes, caractérisé que la ligne (22) est un câble coaxial.

4. Procédé selon l'une quelconque des revendications précédentes, **caractérisé en ce que** les mesures effectuées par ledit réflectomètre sont des mesures de réflectométrie de type multi-porteuse dite MCTDR.

5. Procédé selon l'une quelconque des revendications précédentes, **caractérisé en ce que** ledit réflectomètre effectue une comparaison (47) desdites amplitudes avec une seconde référence (41) dite référence initiale, ladite seconde référence étant inférieure à ladite référence donnée (42), une information (48) étant générée lorsqu'au moins une desdites amplitudes dépasse ladite référence initiale.

6. Procédé selon la revendication 5, **caractérisé en ce que** ladite référence initiale est supérieure ou égale aux amplitudes des échos reçus lorsque ladite ligne (22) est dans des conditions de fonctionnement données dite initiales.

7. Procédé selon l'une quelconque des revendications 5 ou 6, **caractérisé en ce que** ladite référence donnée (42) est modifiée lorsqu'au moins une amplitude mesurée dépasse ladite référence initiale (41).

8. Procédé selon la revendication 7, **caractérisé en ce que** la nouvelle valeur de ladite référence donnée est supérieure à ladite amplitude mesurée.

9. Procédé selon l'une quelconque des revendications précédentes, **caractérisé en ce qu'**un signal de réflectométrie étant injecté sur la deuxième extrémité de ladite ligne (22), les échos reçus à cette extrémité sont mesurés et comparés à au moins ladite référence donnée (42).

10. Procédé selon l'une quelconque des revendications précédentes, **caractérisé en ce que** ladite installation étant un conduit d'air, ladite ligne (22) étant placée le long dudit conduit de façon à réagir à une élévation produite par une fuite d'air chaud, ledit procédé est appliqué à la détection de fuites dans ledit conduit, une fuite provoquant une augmentation locale de température formant un point chaud.

11. Procédé selon la revendication 10, **caractérisé en ce que** ledit conduit d'air est situé dans un aéronef.

12. Dispositif de détection d'un point chaud dans une installation, ledit dispositif comporte au moins :

- une ligne (22) composée d'au moins deux conducteurs isolés par un matériau dont l'impédance d'isolement (24) dépend localement de la température, ladite ligne étant apte à parcourir ladite installation ;
- un réflectomètre (21) apte à transmettre périodiquement un signal de réflectométrie à une extrémité de ladite ligne et à mesurer les échos reçus ;

**caractérisé en ce que** ledit dispositif est configuré pour mettre en œuvre le procédé selon l'une quelconque des revendications précédentes.

**Patentansprüche**

1. Verfahren zum Feststellen eines heißen Punkts in einer Anlage, wobei das Verfahren mindestens verwendet:

- eine Leitung (22), die aus mindestens zwei Leitern besteht, die durch ein Material isoliert sind, dessen Isolationsimpedanz (24) lokal von der Temperatur abhängt, wobei die Leitung die Anlage durchläuft;
- ein Reflektometer (21), das ein Reflektometriesignal an ein Ende der Leitung periodisch überträgt, wobei sich das Signal entlang der Leitung ausbreitet, wobei das Reflektometer die empfangenen Echos misst und die Amplituden der Echos mit einer gegebenen Referenz (42) vergleicht (44);

**dadurch gekennzeichnet, dass** ein heißer Punkt festgestellt wird, wenn die Amplituden einer gegebenen Anzahl von aufeinanderfolgenden Echos zunehmend größer als die gegebene Referenz sind, wobei die Echos durch eine Verringerung des lokalen Werts der Isolationsimpedanz (24) verursacht werden.

2. Verfahren nach Anspruch 1, **dadurch gekennzeichnet, dass** die Lokalisierungsberechnungen (45) der lokalen Impedanzabnahme ausgeführt werden, wenn der heiße Punkt festgestellt wird.

3. Verfahren nach einem der vorstehenden Ansprüche, **dadurch gekennzeichnet, dass** die Leitung (22) ein Koaxialkabel ist.

4. Verfahren nach einem der vorstehenden Ansprüche, **dadurch gekennzeichnet, dass** die Messungen, die durch das Reflektometer ausgeführt werden, Reflektometriemessungen einer Vielträgerart, genannt MCTDR, sind.

5. Verfahren nach einem der vorstehenden Ansprüche, **dadurch gekennzeichnet, dass** das Reflektometer einen Vergleich (47) der Amplituden mit einer zweiten Referenz (41) durchführt, genannt anfängliche Referenz, wobei die zweite Referenz niedriger als die gegebene Referenz (42) ist, wobei Informationen (48) erzeugt werden, wenn mindestens eine der Amplituden die anfängliche Referenz überschreitet.

6. Verfahren nach Anspruch 5, **dadurch gekennzeichnet, dass** die anfängliche Referenz größer als oder gleich den Amplituden der Echos ist, die empfangen werden, wenn die Leitung (22) in anfänglich genannten, gegebenen Betriebszuständen ist.

7. Verfahren nach einem der Ansprüche 5 oder 6, **dadurch gekennzeichnet, dass** die gegebene Referenz (42) modifiziert wird, wenn mindestens eine gemessene Amplitude die anfängliche Referenz (41) überschreitet.

8. Verfahren nach Anspruch 7, **dadurch gekennzeichnet, dass** der neue Wert der gegebenen Referenz größer als die gemessene Amplitude ist.

**9.** Verfahren nach einem der vorstehenden Ansprüche, **dadurch gekennzeichnet, dass** ein Reflektometriesignal an dem zweiten Ende der Leitung (22) eingespeist wird, wobei die Echos, die an diesem Ende empfangen werden, gemessen und mit mindestens der gegebenen Referenz (42) verglichen werden.

**10.** Verfahren nach einem der vorstehenden Ansprüche, **dadurch gekennzeichnet, dass** die Anlage ein Luftkanal ist, wobei die Leitung (22) entlang des Kanals angeordnet ist, um auf einen Anstieg zu reagieren, der durch ein Leck von heißer Luft erzeugt wird, wobei das Verfahren auf die Feststellung von Lecks in dem Kanal angewendet wird, wobei ein Leck eine lokale Temperaturerhöhung verursacht, die einen heißen Punkt ausbildet.

**11.** Verfahren nach Anspruch 10, **dadurch gekennzeichnet, dass** sich der Luftkanal in einem Luftfahrzeug befindet.

**12.** Vorrichtung zum Feststellen eines heißen Punkts in einer Anlage, wobei die Vorrichtung mindestens aufweist:

- eine Leitung (22), die aus mindestens zwei Leitern besteht, die durch ein Material isoliert sind, dessen Isolationsimpedanz (24) lokal von der Temperatur abhängt, wobei die Leitung geeignet ist, um die Anlage zu durchlaufen;
- ein Reflektometer (21), das geeignet ist, um ein Reflektometriesignal an ein Ende der Leitung periodisch zu übertragen und um die empfangenen Echos zu messen;

**dadurch gekennzeichnet, dass** die Vorrichtung zum Umsetzen des Verfahrens nach einem der vorstehenden Ansprüche konfiguriert ist.

## Claims

**1.** Method for detecting a hot spot in a facility, said method using at least:

- one line (22) consisting of at least two conductors which are insulated by a material of which the insulation impedance (24) depends locally on the temperature, said line passing through said facility;
- one reflectometer (21) which periodically transmits a reflectometry signal to one end of said line, said signal propagating along said line, said reflectometer measuring the echoes received and comparing (44) the amplitudes of said echoes with a given reference (42);

**characterized in that** a hot spot is detected when the amplitudes of a given number of successive echoes are increasingly greater than said given reference, said echoes being caused by a decrease in the local value of said insulation impedance (24).

**2.** Method according to claim 1, **characterized in that** the localization calculations (45) of the local decrease in impedance are carried out when said hot spot is detected.

**3.** Method according to either of the preceding claims, **characterized in that** the line (22) is a coaxial cable.

**4.** Method according to any of the preceding claims, **characterized in that** the measurements carried out by said reflectometer are reflectometry measurements of the multi-carrier type referred to as MCTDR.

**5.** Method according to any of the preceding claims, **characterized in that** said reflectometer carries out a comparison (47) of said amplitudes with a second reference (41) referred to as the initial reference, said second reference being lower than said given reference (42), a piece of information (48) being generated when at least one of said amplitudes exceeds said initial reference.

**6.** Method according to claim 5, **characterized in that** said initial reference is greater than or equal to the amplitudes of the echoes received when said line (22) is in given, so-called initial, operating conditions.

**7.** Method according to either claim 5 or claim 6, **characterized in that** said given reference (42) is modified when at least one measured amplitude exceeds said initial reference (41).

**8.** Method according to claim 7, **characterized in that** the new value of said given reference is greater than said measured amplitude.

9. Method according to any of the preceding claims, **characterized in that** a reflectometry signal is injected on the second end of said line (22), the echoes received at this end being measured and compared with at least said given reference (42).

10. Method according to any of the preceding claims, **characterized in that** said facility is an air duct, said line (22) being placed along said duct so as to react to a rise produced by a leak of hot air, said method being applied to the detection of leaks in said duct, a leak causing a local increase in temperature forming a hot spot.

11. Method according to claim 10, **characterized in that** said air duct is located in an aircraft.

12. Device for detecting a hot spot in a facility, said device comprising at least:

- one line (22) consisting of at least two conductors which are insulated by a material of which the insulation impedance (24) depends locally on the temperature, said line being capable of passing through said facility;
- one reflectometer (21) which is capable of periodically transmitting a reflectometry signal to one end of said line and of measuring the echoes received;

**characterized in that** said device is configured to implement the method according to any of the preceding claims.

11

Mesure 1 Ω

1

Point chaud
(court-circuit)

2

Mesure 2 Ω

12

FIG.1

22

21

20

$Z_c$

20

$Z_c$

23

24 $Z_h$

FIG.2

FIG.3

EP 3 227 651 B2

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5793293 A
- US 5185594 A
- US 2011102183 A1
- FR 2292962 A1
- WO 2009138391 A